# EUROPEAN PATENT APPLICATION

(11) **EP 4 404 312 A1**
(43) Date of publication of application: **24.07.2024**
(21) Application number: 22887028.3
(22) Date of filing: 25.10.2022
(51) Int. Cl.: H01M 4/86, C25B 9/23, C25B 11/042, H01M 8/04, H01M 8/12

(54) **ELECTROCHEMICAL CELL, ELECTROCHEMICAL CELL DEVICE, MODULE, AND MODULE STORAGE DEVICE**

(30) Priority: 28.10.2021 JP 2021176897
(71) Applicant: Kyocera Corporation, Kyoto-shi Kyoto 612-8501 (JP)
(72) Inventor: MIYAZAKI, Kazunari, Kyoto-shi, Kyoto 612-8501 (JP)
(74) Representative: Viering, Jentschura & Partner mbB Patent- und Rechtsanwälte
(86) International application number: PCT/JP2022/039777
(87) International publication number: WO 2023/074702

(57) **Abstract**

An electrochemical cell includes a first electrode layer, a second electrode layer, and a solid electrolyte layer. The solid electrolyte layer is located between the first electrode layer and the second electrode layer, and has oxide ion conductivity. The first electrode layer includes an electron conductive material and a first material containing, as a main component, a first element having an electronegativity smaller than that of zirconium.

## Description

### TECHNICAL FIELD

The present disclosure relates to an electrochemical cell, an electrochemical cell device, a module, and a module housing device.

### BACKGROUND OF INVENTION

In recent years, various fuel cell stack devices each including a plurality of fuel cells have been proposed, as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: JP 2014-524655 T

### SUMMARY

In an aspect of an embodiment, an electrochemical cell includes a first electrode layer, a second electrode layer, and a solid electrolyte layer. The solid electrolyte layer is located between the first electrode layer and the second electrode layer, and has oxide ion conductivity. The first electrode layer includes an electron conductive material and a first material containing, as a main component, a first element having an electronegativity smaller than that of zirconium.

An electrochemical cell device of the present disclosure includes a cell stack containing the electrochemical cell described above.

A module of the present disclosure includes the electrochemical cell device described above and a storage container housing the electrochemical cell device.

Further, a module housing device of the present disclosure includes the module described above, an auxiliary device for operating the module, and an external case that houses the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along a line X-X illustrated in FIG. 2A.
FIG. 2C is a top view illustrating an example of the electrochemical cell device according to the first embodiment.
FIG. 3 is an enlarged cross-sectional view of a region R1 indicated in FIG. 1A.
FIG. 4 is an exterior perspective view illustrating an example of a module according to the first embodiment.
FIG. 5 is an exploded perspective view schematically illustrating an example of a module housing device according to the first embodiment.
FIG. 6 is a cross-sectional view illustrating an electrochemical cell device according to a second embodiment.
FIG. 7 is a horizontal cross-sectional view illustrating an example of an electrochemical cell according to the second embodiment.
FIG. 8 is an enlarged cross-sectional view of a region R2 indicated in FIG. 7.
FIG. 9 is a perspective view illustrating an example of an electrochemical cell according to a third embodiment.
FIG. 10 is a partial cross-sectional view of the electrochemical cell illustrated in FIG. 9.
FIG. 11 is an enlarged cross-sectional view of a region R3 indicated in FIG. 10.
FIG. 12A is a horizontal cross-sectional view illustrating an example of an electrochemical cell according to a fourth embodiment.
FIG. 12B is a horizontal cross-sectional view illustrating another example of the electrochemical cell according to the fourth embodiment.
FIG. 12C is a horizontal cross-sectional view illustrating another example of the electrochemical cell according to the fourth embodiment.
FIG. 13 is an enlarged cross-sectional view of a region R4 indicated in FIG. 12A.

### DESCRIPTION OF EMBODIMENTS

Embodiments of an electrochemical cell, an electrochemical cell device, a module and a module housing device disclosed in the present application will now be described in detail with reference to the accompanying drawings. Note that the disclosure is not limited by the following embodiments.

Note that the drawings are schematic and that the dimensional relationships between elements, the proportions of the elements, and the like may differ from the actual ones. Further, there may be differences between the drawings in the dimensional relationships, proportions, and the like.

### First Embodiment

### Configuration of Electrochemical Cell

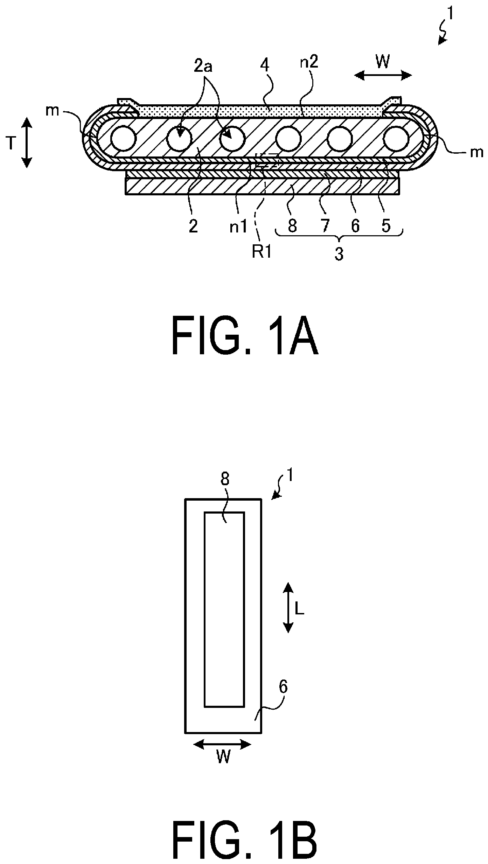

First, with reference to FIGs. 1A to 1C, an example of a solid oxide fuel cell will be described as an electrochemical cell constituting the electrochemical cell device according to the first embodiment. The electrochemical cell device may include a cell stack including a plurality of the electrochemical cells. The electrochemical cell device including the plurality of electrochemical cells is simply referred to as a cell stack device.

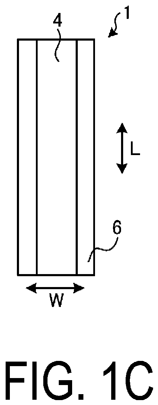

FIG. 1A is a horizontal cross-sectional view illustrating an example of an electrochemical cell according to the first embodiment, FIG. 1B is a side view of an example of the electrochemical cell according to the first embodiment when viewed from an air electrode side, and FIG. 1C is a side view of an example of the electrochemical cell 1 according to the first embodiment when viewed from an interconnector side. Note that FIGs. 1A to 1C each illustrate an enlarged view of a part of a respective one of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The thickness in a thickness direction T of the entire cell 1 is, for example, from 1 mm to 5 mm.

As illustrated in FIG. 1A, the cell 1 includes a support substrate 2 with electrical conductivity, an element portion 3, and an interconnector 4. The support substrate 2 has a pillar shape having a pair of a first surface n1 and a second surface n2 that face each other, and a pair of arc-shaped side surfaces m that connect the first surface n1 and the second surface n2.

The element portion 3 is provided on the first surface n1 of the support substrate 2. The element portion 3 includes a fuel electrode layer 5, a solid electrolyte layer 6, and an air electrode layer 8. In the example illustrated in FIG. 1A, the interconnector 4 is located on the second surface n2 of the cell 1. The cell 1 may include an intermediate layer 7 between the solid electrolyte layer 6 and the air electrode layer 8.

As illustrated in FIG. 1B, the air electrode layer 8 does not extend to the lower end of the cell 1. At the lower end portion of the cell 1, only the solid electrolyte layer 6 is exposed on a surface of the first surface n1. As illustrated in FIG. 1C, the interconnector 4 may extend to the lower end of the cell 1. At a lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability and allows a fuel gas flowing through the gas-flow passages 2a to pass through to the fuel electrode layer 5. The support substrate 2 may be electrically conductive. The support substrate 2 having electrical conductivity collects electricity generated in the element portion 3 to the interconnector 4.

The material of the support substrate 2 includes, for example, an iron group metal component and an inorganic oxide. For example, the iron group metal component may be, for example, Ni (nickel) and/or NiO. The inorganic oxide may be, for example, a specific rare earth element oxide. The rare earth element oxide may include Y, for example.

The fuel electrode layer 5 includes an electron conductive material and a first material containing a first element having an electronegativity smaller than that of zirconium as a main component. The fuel electrode layer 5 is an example of the first electrode layer.

The open porosity of the fuel electrode layer 5 may be, for example, 15% or more, and particularly may be in a range from 20% to 40%. The thickness of the fuel electrode layer 5 may be, for example, from 1 µm to 30 µm. Details of the fuel electrode layer 5 will be described later.

The solid electrolyte layer 6 is an electrolyte and delivers ions between the fuel electrode layer 5 and the air electrode layer 8. At the same time, the solid electrolyte layer 6 has gas blocking properties, and makes leakage of the fuel gas and the oxygen-containing gas less likely to occur.

The solid electrolyte layer 6 has oxide ion conductivity. The solid electrolyte layer 6 may contain Zr, for example. The material of the solid electrolyte layer 6 may be, for example, ZrO₂ in which from 3 mole% to 15 mole% of a rare earth element oxide, calcium oxide, or magnesium oxide is contained as a solid solution. The rare earth element oxide may contain, for example, one or more rare earth elements selected from Sc, Y, La, Nd, Sm, Gd, Dy, and Yb. The material of the solid electrolyte layer 6 may be, for example, stabilized zirconia containing Yb. The material of the solid electrolyte layer 6 may be, for example, a ceria-based material in which La, Sm, or Gd is contained as a solid solution, or may be a lanthanum gallate-based perovskite compound. The solid electrolyte layer 6 may further contain, for example, a perovskite compound represented by the formula ABO₃ and having proton conductivity. Note that, in the formula ABO₃, A is, for example, one or more elements selected from Ca, Sr, Ba and La, and B is, for example, one or more elements selected from Zr, Ce, Sn and Sc. In the perovskite compound having proton conductivity, a rare earth element such as Sc, Y, La, Nd, Sm, Gd, Dy, or Yb may be contained as a solid solution.

The air electrode layer 8 has gas permeability. The air electrode layer 8 is an example of the second electrode layer. The open porosity of the air electrode layer 8 may be, for example, in the range from 20% to 50%, particularly from 30% to 50%.

The material of the air electrode layer 8 is not particularly limited as long as the material is commonly used for the air electrode. The material of the air electrode layer 8 may be, for example, an electrically conductive ceramic such as a so-called ABO₃-type perovskite oxide.

The material of the air electrode layer 8 may be, for example, a composite oxide in which Sr (strontium) and La (lanthanum) coexist in the A-site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion prevention layer. When an element such as strontium (Sr) contained in the air electrode layer 8 diffuses into the solid electrolyte layer 6, a resistance layer such as, for example, SrZrOs is formed in the solid electrolyte layer 6. The intermediate layer 7 makes it difficult to diffuse Sr, thereby making it difficult to form SrZrO₃ and other oxides having electrical insulation.

The material of the intermediate layer 7 is not particularly limited as long as the material is one generally used for the diffusion prevention layer of elements between the air electrode layer 8 and the solid electrolyte layer 6. The material of the intermediate layer 7 may contain, for example, CeO₂ (cerium oxide) in which rare earth elements other than Ce (cerium) are in solid solution. As such rare earth elements, for example, Gd (gadolinium), Sm (samarium), or the like may be used.

The interconnector 4 is dense, and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite-type oxide (LaCrO₃-based oxide), a lanthanum strontium titanium-based perovskite-type oxide (LaSrTiO₃-based oxide), or the like may be used. These materials have electrical conductivity, and are unlikely to be reduced and also unlikely to be oxidized even when brought into contact with a fuel gas such as a hydrogen-containing gas and an oxygen-containing gas such as air. A metal or an alloy may be used as the material of the interconnector 4.

### Configuration of Electrochemical Cell Device

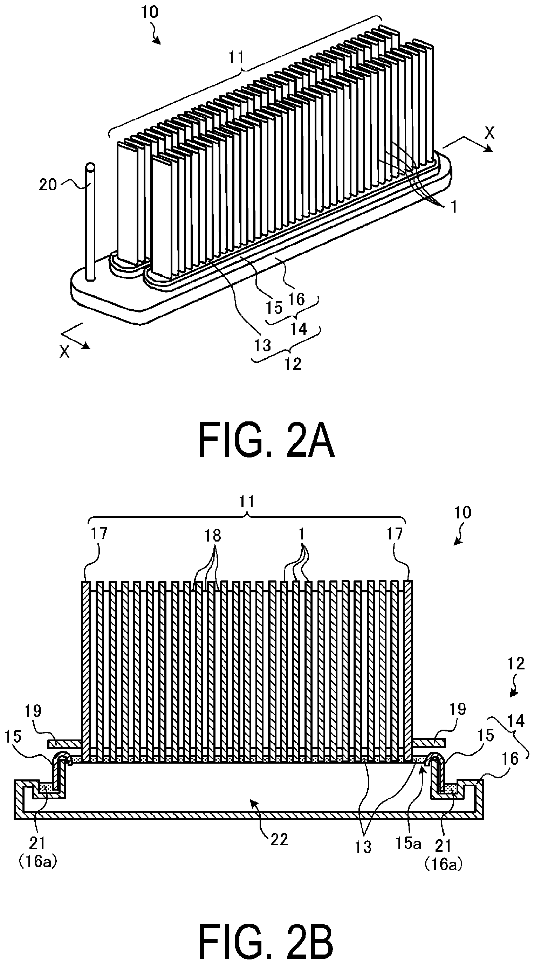

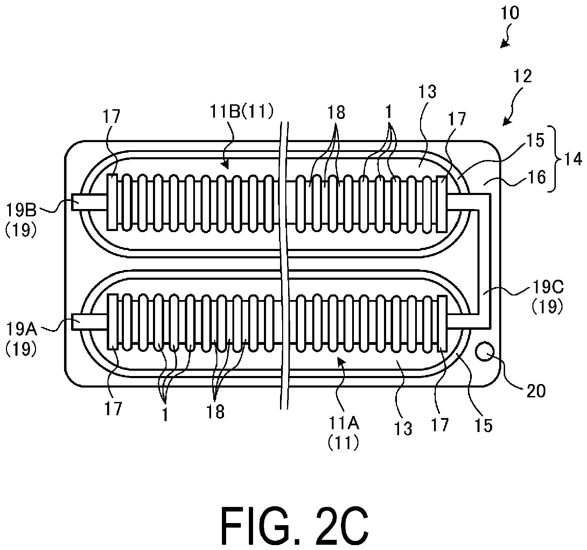

An electrochemical cell device according to the present embodiment using the electrochemical cell described above will be described with reference to FIGs. 2A to 2C. FIG. 2A is a perspective view illustrating an example of the electrochemical cell device according to the first embodiment, FIG. 2B is a cross-sectional view taken along a line X-X illustrated in FIG. 2A, and FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of metal and electrically conductive, for example.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21, with which the recessed groove 16a of the gas tank 16 is filled.

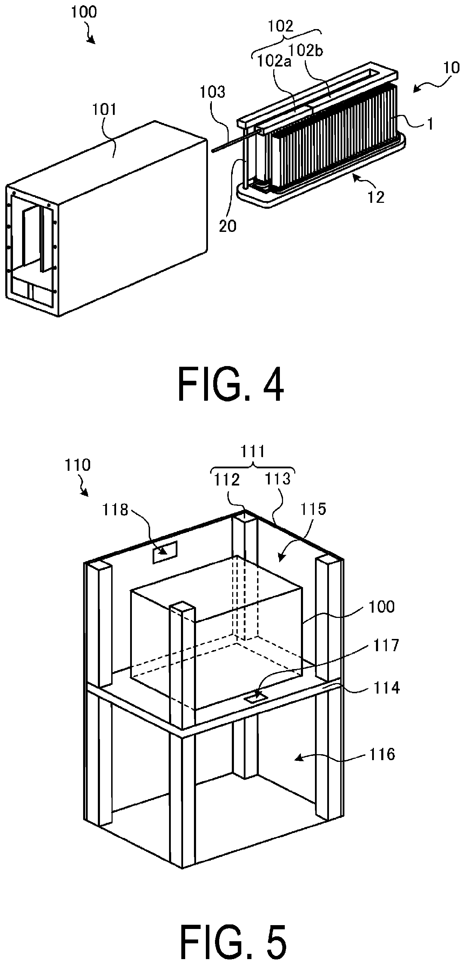

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas supplied to the gas tank 16 is produced by a reformer 102 (see FIG. 4), which will be described later.

A hydrogen-rich fuel gas can be produced, for example, by steam-reforming a raw fuel. When the fuel gas is produced by steam-reforming, the fuel gas contains steam.

In the example illustrated in FIG. 2A, the cell stack device 10 includes two rows of the cell stacks 11, the two support bodies 15, and the gas tank 16. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15. Although the cell stack device 10 including the two rows of cell stacks 11 is illustrated in the 2A, the cell stack device may include one row of cell stacks 11 or three or more rows of cell stacks 11.

The insertion hole 15a has, for example, an oval shape in a top surface view. The length of the insertion hole 15a in an arrangement direction of the cells 1, that is, the thickness direction T, may be longer than the distance between two end current collection members 17 located at both ends of the cell stack 11, for example. The width of the insertion hole 15a may be, for example, greater than the length of the cell 1 in the width direction W (see FIG. 1A).

As illustrated in FIG. 2B, the joined portions between the inner wall of the insertion hole 15a and the lower end portions of the cells 1 are filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series the fuel electrode layer 5 of one of the adjacent ones of the cells 1 with the air electrode layer 8 of the other one of the adjacent ones of the cells 1. More specifically, the electrically conductive member 18 connects the interconnector 4 electrically connected to the fuel electrode layer 5 of the one of the adjacent ones of the cells 1 and the air electrode layer 8 of the other one of the adjacent ones of the cells 1. Note that, when the interconnector 4 is made of metal or alloy, the interconnector 4 and the electrically conductive member 18 may be integrated with each other, or the electrically conductive member 18 may also serve as the interconnector 4.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Details of Fuel Electrode Layer

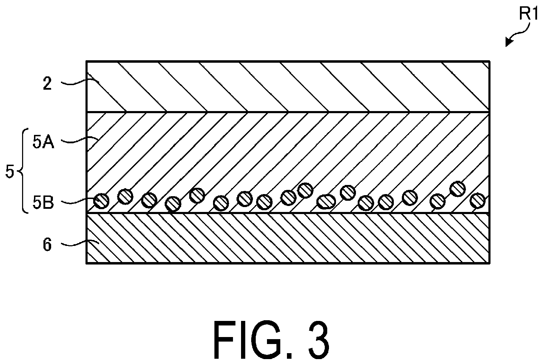

Details of the fuel electrode layer 5 according to the first embodiment will be described next with reference to FIG. 3. FIG. 3 is an enlarged cross-sectional view of the region R1 indicated in FIG. 1A.

As illustrated in FIG. 3, the fuel electrode layer 5 includes an electron conductive material 5A and a first material 5B. The electron conductive material 5A is located between the support substrate 2 and the solid electrolyte layer 6. The first material 5B is located among the electron conductive material 5A.

The electron conductive material 5A may be a porous conductive ceramic containing a material having electrical conductivity and a material having ion conductivity. The material having electrical conductivity is responsible for electron conduction in the fuel electrode layer 5, and the material having ion conductivity is responsible for ion conduction in the fuel electrode layer 5 to promote the reaction between hydrogen and oxygen. As the electron conductive material 5A, for example, ceramics containing: ZrO₂ in which a calcium oxide, a magnesium oxide, or a rare earth element oxide is contained as a solid solution, and Ni and/or NiO may be used. This rare earth element oxide may contain a rare earth element selected from, for example, Sc, Y, La, Nd, Sm, Gd, Dy, and Yb. Hereinafter, ZrO₂ in which a calcium oxide, a magnesium oxide, or a rare earth element oxide is contained as a solid solution may be referred to as stabilized zirconia. Stabilized zirconia also includes partially stabilized zirconia. Stabilized zirconia is an example of a material having ion conductivity, and Ni and/or NiO is an example of a material having electrical conductivity. The fuel electrode layer 5 may contain a plurality of types of electron conductive materials 5A.

The first material 5B contains a first element having an electronegativity smaller than that of zirconium as a main component. The first element may contain, for example, an alkaline earth metal such as Ca, Sr, Ba and/or a rare earth element such as Sc, Y, La, Nd, Sm, Eu, Gd, Tb, Dy and Yb, in particular a rare earth element selected from La, Nd, Sm, Eu and Yb. "Contains a first element as a main component" refers to, for example, an element occupying 30 mole% or more in terms of oxide. That is, the first material 5B may contain a plurality of first elements.

The first element may be contained in the first material 5B as, for example, an oxide. The first element may be, for example, contained in the first material 5B as a perovskite compound represented by ABO₃. In such a case, the first element may be included in, for example, the A-site. A B-site may contain, for example, any element of Zr, Ce, Ti, and Hf.

When the fuel electrode layer 5 includes the first material 5B having the first element, for example, the number of reaction paths in the fuel electrode layer 5 is increased, and thus the electrode resistance is expected to decrease. The reason the number of reaction paths in the fuel electrode layer 5 increases is considered to be that the first element having a low electronegativity and easily attracting a hydroxyl group (OH⁻) serves as a supply source of the hydroxyl group and promotes the reaction with hydrogen. Thus, with the cell 1 according to the present embodiment, power generation capability can be improved.

When a surface of the fuel electrode layer 5 located on a side opposite to the solid electrolyte layer 6 is defined as a first surface and a surface in contact with the solid electrolyte layer 6 is defined as a second surface, the first material 5B may be included in a larger amount in a site closer to the second surface than to the first surface. The first material 5B may be first particles containing an oxide including the first element. The first particles may be located at a site closer to the second surface more than in a site closer to the first surface. When the first material 5B is contained in a large amount in a site close to the second surface as described above, the cell performances can be further enhanced. Note that, when the fuel electrode layer 5 contains a plurality of first elements, the content of the first element is the total content of the plurality of first elements. The content of the first element is a molar ratio (mole%) of the first element in terms of oxide to the total of the elements contained in the fuel electrode layer 5 in terms of oxide at a predetermined site. The content of the first element in the fuel electrode layer 5 can be confirmed by, for example, elemental analysis using EPMA. Note that, the element contained in the fuel electrode layer 5 is an element detected from the electron conductive material 5A and the first material 5B contained in a predetermined site of the fuel electrode layer 5.

### Module

Descriptions of the module according to the present embodiment using the above-described electrochemical cell device will now be given with reference to FIG 4. FIG. 4 is an exterior perspective view illustrating a module according to the first embodiment. FIG. 4 illustrates a state in which the front and rear surfaces that are part of a storage container 101 are removed, and the cell stack device 10 of a fuel cell housed in the container is taken out rearward.

As illustrated in FIG. 4, the module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

Then, the fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

The above-discussed module 100 is configured such that the cell stack device 10 with improved power generation capability is housed therein as described above, whereby the module 100 with the improved power generation capability can be realized.

### Module Housing Device

FIG. 5 is an exploded perspective view illustrating an example of a module housing device according to the first embodiment. A module housing device 110 according to the present embodiment includes an external case 111, the module 100 illustrated in FIG. 4, and an auxiliary device (not illustrated). The auxiliary device operates the module 100. The module 100 and the auxiliary device are housed in the external case 111. Note that in FIG. 5, the configuration is partially omitted.

The external case 111 of the module housing device 110 illustrated in FIG. 5 includes a support 112 and an external plate 113. A dividing plate 114 vertically partitions the interior of the external case 111. The space above the dividing plate 114 in the external case 111 is a module housing room 115 for housing the module 100. The space below the dividing plate 114 in the external case 111 is an auxiliary device housing room 116 for housing the auxiliary device configured to operate the module 100. Note that in FIG. 5, the auxiliary device housed in the auxiliary device housing room 116 is omitted.

The dividing plate 114 includes an air circulation hole 117 for causing air in the auxiliary device housing room 116 to flow into the module housing room 115 side. The external plate 113 constituting the module housing room 115 includes an exhaust hole 118 for discharging air inside the module housing room 115.

In the module housing device 110 discussed above, the module 100 with improved power generation capability is provided in the module housing room 115 as described above, whereby the module housing device 110 with improved power generation capability can be realized.

Note that, in the embodiment described above, the case where the support substrate of the hollow flat plate-shaped is used has been exemplified; however, the embodiment can also be applied to a cell stack device using a cylindrical support substrate.

### Second Embodiment

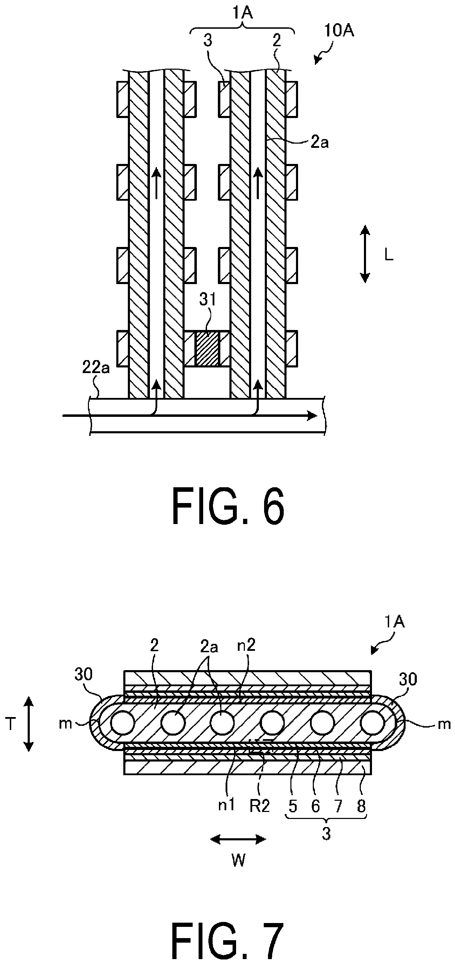

Next, an electrochemical cell and an electrochemical cell device according to a second embodiment will be described with reference to FIG. 6 to FIG. 8.

In the embodiment described above, a so-called "vertically striped type" electrochemical cell device, in which only one element portion including the fuel electrode layer, the solid electrolyte layer, and the air electrode layer is provided on the surface of the support substrate, is exemplified. However, the present disclosure can be applied to a horizontally striped type electrochemical cell device with an array of so-called "horizontally striped type" electrochemical cells, in which a plurality of element portions are provided on the surface of the support substrate at mutually separated locations, and adjacent element portions are electrically connected to each other.

FIG. 6 is a cross-sectional view illustrating an electrochemical cell device according to the second embodiment. FIG. 7 is a horizontal cross-sectional view illustrating an example of an electrochemical cell according to the second embodiment.

As illustrated in FIG. 6, a cell stack device 10A according to the second embodiment includes a plurality of cells 1A extending in the length direction L from a pipe 22a configured to distribute a fuel gas. The cell 1A includes a plurality of element portions 3 on a support substrate 2. A gas-flow passage 2a, through which a fuel gas from the pipe 22a flows, is provided inside the support substrate 2.

The cells 1A are electrically connected to each other via connecting members 31. Each of the connecting members 31 is located between the element portions 3 each included in a corresponding one of the cells 1A and electrically connects adjacent ones of the cells 1A to each other. Specifically, the connecting member 31 electrically connects the air electrode layer 8 of the element portion 3 of one of the adjacent ones of the cells 1A to the fuel electrode layer 5 of the element portion 3 of the other one of the adjacent ones of the cells 1A.

As illustrated in FIG. 7, the cell 1A includes a support substrate 2, a pair of element portions 3, and a sealing portion 30. The support substrate 2 has a pillar shape having a first surface n1 and a second surface n2 which are a pair of flat surfaces facing each other, and a pair of arc-shaped side surfaces m that connect the first surface n1 and the second surface n2.

The pair of element portions 3 are located on the first surface n1 and the second surface n2 of the support substrate 2 so as to face each other. The sealing portion 30 is located to cover the side surface m of the support substrate 2.

The cell 1A has a shape that is vertically symmetric with respect to a plane that passes through a center in the thickness direction T and is parallel to the flat surface of the support substrate 2. The element portion 3 includes a fuel electrode layer 5, a solid electrolyte layer 6, an intermediate layer 7, and an air electrode layer 8 which are layered.

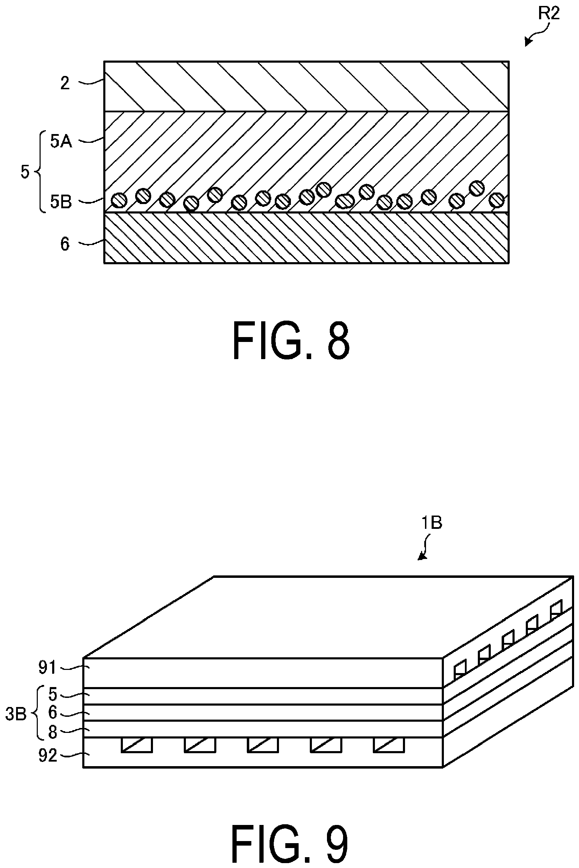

FIG. 8 is an enlarged cross-sectional view of the region R2 indicated in FIG. 7. As illustrated in FIG. 8, the fuel electrode layer 5 includes the electron conductive material 5A and the first material 5B. The electron conductive material 5A is located between the support substrate 2 and the solid electrolyte layer 6. The first material 5B contains, as a main component, a first element having an electronegativity smaller than that of zirconium.

When the fuel electrode layer 5 includes the first material 5B having the first element, for example, the number of reaction paths in the fuel electrode layer 5 is increased, and thus the electrode resistance decreases. Thus, in the present embodiment, the cell 1A can improve power generation capability.

### Third Embodiment

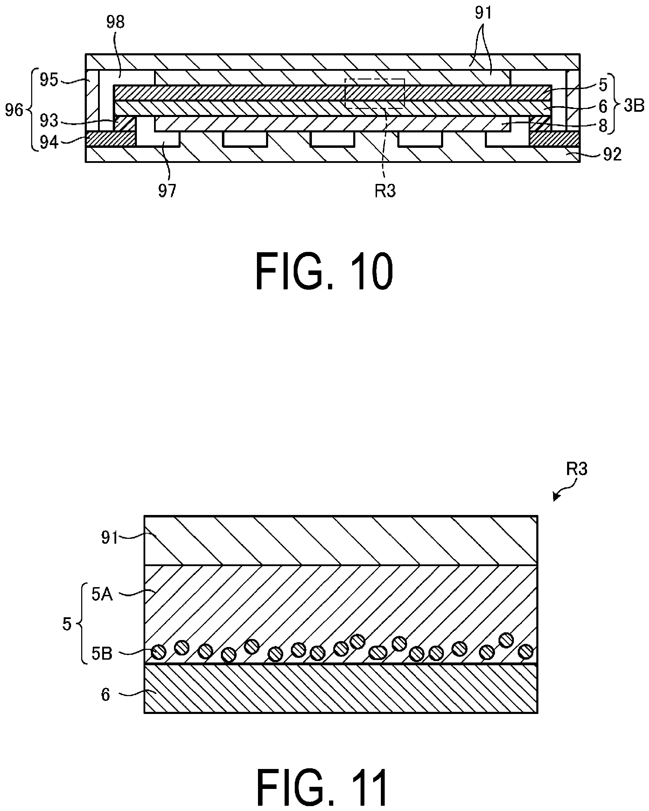

FIG. 9 is a perspective view illustrating an example of an electrochemical cell according to a third embodiment. FIG. 10 is a partial cross-sectional view of the electrochemical cell illustrated in FIG. 9.

As illustrated in FIG. 9A, a cell 1B includes an element portion 3B, in which a fuel electrode layer 5, a solid electrolyte layer 6, and an air electrode layer 8 are layered. The element portion 3B is a site in which the solid electrolyte layer 6 is sandwiched between the fuel electrode layer 5 and the air electrode layer 8. In an electrochemical cell device in which a plurality of flat plate cells are layered, for example, a plurality of cells 1B are electrically connected by electrically conductive members 91 and 92, which are metal layers adjacent to each other. The electrically conductive members 91 and 92 electrically connect the adjacent cells 1B and each include a gas-flow passage for supplying gas to the fuel electrode layer 5 or the air electrode layer 8.

As illustrated in FIG. 10, a sealing material for hermetically sealing a flow passage 98 of a fuel gas and a flow passage 97 of an oxygen-containing gas of a flat plate cell stack is provided. The sealing material is a fixing member 96 of the cell 1B, and includes a bonding material 93 and support members 94 and 95, which constitute a frame. The bonding material 93 may be a glass or may be a metal material such as silver solder.

The support member 94 may be a so-called separator that separates the flow passage 98 of the fuel gas and the flow passage 97 of the oxygen-containing gas. The material of the support members 94 and 95 may be, for example, an electrically conductive metal, or may be an insulating ceramic. When the bonding material 93 is, for example, insulating glass, both the support members 94 and 95 may be metal, or one of the support members 94 and 95 may be an insulating material. When the bonding material 93 is an electrically conductive metal, both or one of the support members 94 and 95 may be an insulating material. When the support members 94 and 95 are metal, the support members 94 and 95 may be formed integrally with the electrically conductive member 92.

One of the bonding material 93 and the support members 94 and 95 has insulating properties and causes the two electrically conductive members 91 and 92 sandwiching the flat plate cell to be electrically insulated from each other.

FIG. 11 is an enlarged cross-sectional view of the region R3 indicated in FIG. 10. As illustrated in FIG. 11, the fuel electrode layer 5 includes the electron conductive material 5A and the first material 5B. The electron conductive material 5A is located between the support substrate 2 and the solid electrolyte layer 6. The first material 5B contains, as a main component, a first element having an electronegativity smaller than that of zirconium.

When the fuel electrode layer 5 includes the first material 5B having the first element, for example, the number of reaction paths in the fuel electrode layer 5 is increased, and thus the electrode resistance decreases. Thus, in the present embodiment, the cell 1B can improve power generation capability.

### Fourth Embodiment

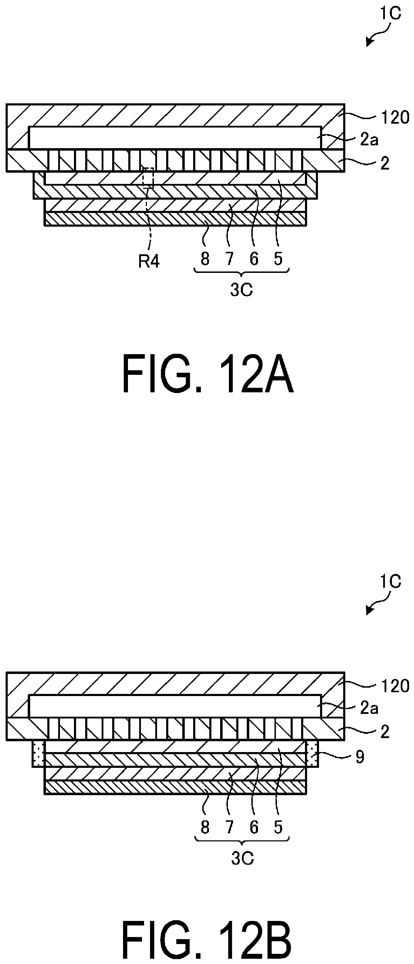

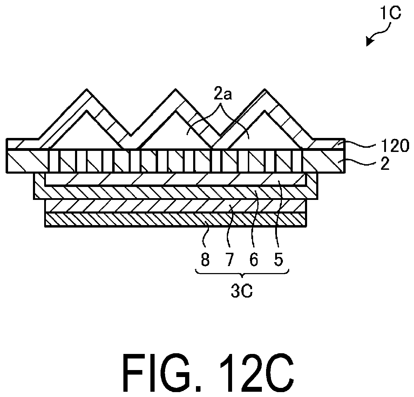

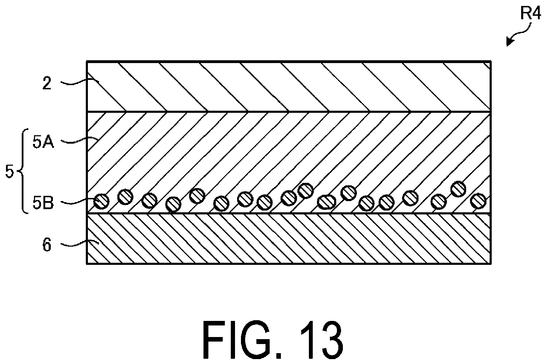

FIG. 12A is a horizontal cross-sectional view illustrating an example of an electrochemical cell according to a fourth embodiment. FIGs. 12B and 12C are horizontal cross-sectional views illustrating another example of the electrochemical cell according to the fourth embodiment. FIG. 13 is an enlarged view of the region R4 illustrated in FIG. 12A. Note that, FIG. 13 can also be applied to the examples in FIGs. 12B and 12C.

As illustrated in FIGs. 12A to 12C, a cell 1C includes an element portion 3C in which a fuel electrode layer 5, a solid electrolyte layer 6, an intermediate layer 7, and an air electrode layer 8 are layered, and a support substrate 2. The support substrate 2 includes through holes or fine holes at a site in contact with the element portion 3C, and includes a member 120 located outside a gas-flow passage 2a. The support substrate 2 allows gas to flow between the gas-flow passage 2a and the element portion 3C. The support substrate 2 may be made of, for example, one or more metal plates. A material of the metal plate may contain chromium. The metal plate may include an electrically conductive coating layer. The support substrate 2 electrically connects adjacent ones of the cells 1C to each other. The element portion 3C may be directly formed on the support substrate 2 or may be bonded to the support substrate 2 by a bonding material.

In the example illustrated in FIG. 12A, the side surface of the fuel electrode layer 5 is covered with the solid electrolyte layer 6 to hermetically seal the gas-flow passage 2a through which the fuel gas flows. As illustrated in FIG. 12B, the side surface of the fuel electrode layer 5 may be covered and sealed with a sealing material 9 made of dense glass or ceramic. The sealing material 9 covering the side surface of the fuel electrode layer 5 may have electrical insulation properties.

The gas-flow passage 2a of the support substrate 2 may be made of the member 120 having unevenness as illustrated in FIG. 12C.

FIG. 13 is an enlarged cross-sectional view of the region R4 indicated in FIG. 12A. As illustrated in FIG. 13, the fuel electrode layer 5 includes an electron conductive material 5A and a first material 5B. The electron conductive material 5A is located between the support substrate 2 and the solid electrolyte layer 6. The first material 5B contains, as a main component, a first element having an electronegativity smaller than that of zirconium.

When the fuel electrode layer 5 includes the first material 5B having the first element, for example, the number of reaction paths in the fuel electrode layer 5 is increased, and thus the electrode resistance decreases. Thus, in the present embodiment, the cell 1B can improve power generation capability.

### Other Embodiments

### An electrochemical cell device according to other embodiments will be described.

In the above embodiments, a fuel cell, a fuel cell stack device, a fuel cell module, and a fuel cell device are illustrated as examples of the "electrochemical cell", the "electrochemical cell device", the "module", and the "module housing device"; other examples include an electrolytic cell, an electrolytic cell stack device, an electrolytic module, and an electrolytic device, respectively. The electrolytic cell includes a first electrode layer and a second electrode layer, and decomposes water vapor into hydrogen and oxygen or decomposes carbon dioxide into carbon monoxide and oxygen by supplying electric power. Although an oxide ion conductor or a hydrogen ion conductor is shown as an example of the electrolyte material of the electrochemical cell in the above embodiment, the electrolyte material may be a hydroxide ion conductor. According to the electrolytic cell, electrolytic cell stack device, electrolytic module, and electrolytic device discussed above, electrolytic performance can be improved.

While the present disclosure has been described in detail, the present disclosure is not limited to the aforementioned embodiment, and various changes, improvements, and the like can be made without departing from the gist of the present disclosure.

As described above, the electrochemical cell (cell 1) according to the embodiment includes the first electrode layer (fuel electrode layer 5), the second electrode layer (air electrode layer 8), and the solid electrolyte layer 6. The solid electrolyte layer 6 is located between the first electrode layer and the second electrode layer, and has oxide ion conductivity. The first electrode layer includes the electron conductive material 5A and the first material 5B containing a first element having an electronegativity smaller than that of zirconium as a main component. This can improve the cell performance such as power generation capability and electrolytic performance of the electrochemical cell.

The electrochemical cell device (cell stack device 10) according to the present embodiment includes the cell stack 11 containing the electrochemical cell described above. This can improve the performance such as power generation capability and electrolytic performance of the electrochemical cell device.

The module 100 according to the embodiment includes the electrochemical cell device (the cell stack device 10) described above, and the storage container 101 housing the electrochemical cell device. As a result, the module 100 with improved performance can be obtained.

The module housing device 110 according to embodiment includes the module 100 described above, an auxiliary device configured to operate the module 100, and the external case 111 configured to accommodate the module 100 and the auxiliary device. As a result, the module housing device 110 with improved performance can be obtained.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
2 Support substrate
5 Fuel electrode layer
5A Electron conductive material
5B First material
6 Solid electrolyte layer
7 Intermediate layer
8 Air electrode layer
10 Cell stack device
11 Cell stack
12 Fixing member
13 Fixing material
14 Support member
15 Support body
16 Gas tank
17 End current collection member
18 Electrically conductive member
100 Module
110 Module housing device

## Claims

1. An electrochemical cell comprising:
a first electrode layer;
a second electrode layer; and
a solid electrolyte layer located between the first electrode layer and the second electrode layer, the solid electrolyte layer having oxide ion conductivity, wherein
the first electrode layer contains an electron conductive material and a first material containing, as a main component, a first element having an electronegativity smaller than an electronegativity of zirconium.

2. The electrochemical cell according to claim 1, wherein
the first electrode layer comprises a first surface located on a side opposite to the solid electrolyte layer and a second surface in contact with the solid electrolyte layer, and
the first element is contained in a larger amount in a site closer to the second surface than to the first surface.

3. The electrochemical cell according to claim 1 or 2, wherein
the first element contains an alkaline earth metal.

4. The electrochemical cell according to claim 3, wherein
the first element contains one or more elements selected from Ca, Sr, and Ba.

5. The electrochemical cell according to any one of claims 1 to 4, wherein
the first element contains one or more rare earth elements selected from Sc, Y, La, Nd, Sm, Eu, Gd, Tb, Dy, and Yb.

6. The electrochemical cell according to claim 5, wherein
the first element contains one or more elements selected from La, Nd, Sm, Eu, and Yb.

7. The electrochemical cell according to any one of claims 1 to 6, wherein
the first material is first particles containing an oxide containing the first element.

8. The electrochemical cell according to claim 7, wherein
the first particles are located in a site closer to the second surface of the first electrode layer in contact with the solid electrolyte layer more than in a site closer to the first surface of the first electrode layer located on the side opposite to the solid electrolyte layer.

9. An electrochemical cell device comprising:
a cell stack comprising the electrochemical cell according to any one of claims 1 to 8.

10. A module comprising:
the electrochemical cell device according to claim 9; and
a storage container housing the electrochemical cell device.

11. A module housing device comprising:
the module according to claim 10;
an auxiliary device configured to operate the module; and
an external case housing the module and the auxiliary device.
